(19) Europäisches Patentamt / European Patent Office / Office européen des brevets

(11) **EP 1 977 941 B1**

(12) **FASCICULE DE BREVET EUROPEEN**

(45) Date de publication et mention
de la délivrance du brevet:
**25.06.2014 Bulletin 2014/26**

(51) Int Cl.:
***B60T 8/172*** *(2006.01)*

(21) Numéro de dépôt: **08154066.8**

(22) Date de dépôt: **04.04.2008**

(54) **Procédé d'estimation d'une hauteur d'eau au contact d'un pneumatique sur une chaussée**

Abschätzverfahren der Wasserhöhe in Kontakt mit einem Reifen auf einer Fahrbahn

Method of estimating the height of water in contact with a tyre on a road

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **06.04.2007 FR 0702576**

(43) Date de publication de la demande:
**08.10.2008 Bulletin 2008/41**

(73) Titulaires:
• **COMPAGNIE GENERALE DES
ETABLISSEMENTS MICHELIN
63000 Clermont-Ferrand (FR)**
• **MICHELIN Recherche et Technique S.A.
1763 Granges-Paccot (CH)**

(72) Inventeur: **Spetler, Frédéric
63190 Lezoux (FR)**

(74) Mandataire: **Dequire, Philippe Jean-Marie Denis
23, Place des Carmes-Déchaux
SGD/LG/PI F35 Ladoux
63040 Clermont-Ferrand Cedex 09 (FR)**

(56) Documents cités:
**EP-A- 1 498 291    DE-A1- 10 242 121**

**Description**

La présente invention a trait à l'estimation d'une hauteur d'eau présente au contact d'un pneumatique sur une chaussée mouillée parcourue par un véhicule. Elle concerne plus particulièrement le calcul estimé d'une hauteur d'eau à partir de la mesure de contraintes dans la bande de roulement d'un pneumatique dudit véhicule.

Il est en effet utile de pouvoir estimer en temps réel la hauteur d'eau présente sur un sol afin de mieux appréhender un début d'hydroplanage.

Le phénomène d'hydroplanage se caractérise par la présence momentanée d'une quantité d'eau entre le sol composant la chaussée et la partie de la bande de roulement du pneumatique en contact avec le sol. Dans ce cas, le film formé par la présence de l'eau empêche tout ou partie de ce contact : il n'y a plus d'adhérence et donc plus de transfert d'efforts entre le véhicule et la chaussée.

Un film d'eau entre tout ou partie de la bande roulement du pneumatique en contact avec le sol et la chaussée se forme, lorsque le débit d'eau circulant entre ces deux surfaces devient supérieur au débit d'eau que peut évacuer à la fois le motif du revêtement du sol et celui du pneumatique. Cet effet de saturation est fonction de la hauteur d'eau présente sur la chaussée et de la vitesse du véhicule.

Les conséquences d'un hydroplanage lors d'une accélération par un effort moteur, lors d'une décélération par un effort freineur ou lors d'un changement de direction sont importantes et peuvent impliquer une perte partielle ou totale de contrôle du véhicule. Il est donc capital lors d'une circulation sur un sol mouillé de pouvoir anticiper les conditions d'un hydroplanage.

Vis-à-vis du conducteur du véhicule, aucun signe annonciateur ne précède le début d'un phénomène partiel ou total d'hydroplanage : le danger est soudain et imprévisible.

De plus, la mesure de la hauteur d'eau est une information susceptible d'être prise en compte par les divers dispositifs d'assistance électronique utilisés par exemple pour la régulation antiblocage des freins d'un véhicule (ABS), la régulation antipatinage des roues motrices (ASR), le contrôle de trajectoires (ESP) ou pour d'autres formes de contrôle ou de surveillances comme, par exemple, la pression des pneus. Cette information couplée, par exemple, à la mesure de l'adhérence permettrait d'améliorer grandement l'efficacité, en temps réel, de ces dispositifs.

Il est connu par le document US-A-5 502 433 de détecter un phénomène d'hydroplanage mais aucune information n'est recueillie quant à la prise en compte ou l'estimation de la hauteur d'eau sur le sol de la chaussée. Il s'agit, pour ce document, de simplement constater un phénomène d'hydroplanage sous le pneumatique, sans pouvoir le quantifier ni même déterminer l'un des principaux paramètres à l'origine de ce phénomène.

Dans ce qui suit, en dehors d'indications différentes, on entend généralement par :

- « aire de contact apparente » : la portion de la bande de roulement du pneumatique dans laquelle le ou les capteurs de la bande de roulement donnent un signal non nul ;
- aire de « contact direct » : la portion de la bande de roulement du pneumatique dans laquelle le contact entre le sol et la bande de roulement est direct ; et
- aire de « contact indirect » : la portion de la bande de roulement du pneumatique dans laquelle un film d'eau est disposé entre la bande de roulement et le sol.

L'invention a pour objet un procédé d'estimation de la hauteur d'eau ($h_e$) présente sur un sol mouillé d'une chaussée et située au contact d'une bande de roulement d'un pneumatique d'un véhicule évoluant sur ce sol mouillé, la bande de roulement du pneumatique étant équipée d'un ou plusieurs capteurs permettant chacun de mesurer une grandeur caractéristique des sollicitations que subit localement la bande de roulement lorsque le pneumatique roule sur le sol. Ce procédé est caractérisé en ce qu'il comporte les étapes suivantes :

- mesurer la grandeur caractéristique lorsque le pneumatique roule sur le sol ;
- produire un signal correspondant à ces mesures ;
- extraire de ce signal une portion relative au passage du ou des capteurs dans l'aire de contact apparente du pneumatique sur le sol ;
- déduire de cette information une valeur momentanée ($\Delta L$) reliée à la longueur de la zone de « contact indirect » de l'aire de contact apparente de la bande de roulement du pneumatique sur le sol ; et
- estimer la hauteur d'eau ($h_e$) à partir d'un calcul prenant en compte la valeur momentanée déduite.

La grandeur mesurée par le capteur peut avantageusement être caractéristique de la compression subie par la bande de roulement du pneumatique dans une direction normale au plan de la chaussée.

Dans ce cas, l'étape de déduction d'une valeur momentanée correspond à :

- lorsque la portion comprend deux plateaux successifs, la valeur momentanée est la mesure de la longueur ($\Delta L$) du premier plateau, du côté de l'entrée de l'aire de contact apparente ;
- lorsque la portion comprend un seul plateau, la valeur momentanée est zéro.

La grandeur mesurée par le capteur peut aussi être caractéristique du cisaillement longitudinal subi par la bande de roulement du pneumatique.

L'étape de déduction d'une valeur momentanée correspond alors à :

- lorsque la portion comprend, du côté de l'entrée de l'aire de contact, deux pics positifs successifs, la valeur momentanée est la mesure de la longueur ($\Delta L$) séparant les maxima des deux pics ;
- lorsque la portion comprend un seul pic positif, la valeur momentanée ($\Delta L$) est zéro.

Le capteur implanté dans la bande de roulement du pneumatique peut aussi mesurer à la fois une grandeur caractéristique de la compression normale et une grandeur caractéristique du cisaillement longitudinal subi par la bande de roulement du pneumatique.

L'estimation de la valeur momentanée ($\Delta L$) est alors avantageusement une moyenne pondérée des estimations déduites des signaux de compression normale et de cisaillement longitudinal.

Avantageusement, la hauteur d'eau ($h_e$) est déduite de la valeur momentanée ($\Delta L$) en utilisant un abaque.

Un tel abaque peut être établi expérimentalement en effectuant des mesures de signaux caractéristiques de la compression ou du cisaillement longitudinal de pain de pneumatiques pour différentes hauteurs d'eau.

On peut aussi déduire la hauteur d'eau ($h_e$) en utilisant l'équation suivante :

$$h_e = K(1 - \cos(\arcsin \frac{\Delta L}{K})$$

avec $h_e$ hauteur d'eau estimée, $\Delta L$ la valeur momentanée et K une constante liée au pneumatique.

Le facteur $K$ peut avantageusement être estimé par le petit rayon de raccordement de Koutny ($R_K$) qui est sensiblement constant pour un pneumatique donné. On peut représenter les variations de courbure de la ceinture du pneumatique à l'aide d'un modèle géométrique simple appelé modèle de Koutny. Le modèle de Koutny est composé de trois arcs de cerlces tangents. Un arc de cercle correspond à la courbure dans la partie supérieure du pneumatique et deux arcs de cercle identiques correspondent à la courbure du pneumatique à l'entrée et à la sortie de l'aire de contact. Connaissant la longueur de l'aire de contact et la circonférence, invariante, de la ceinture, ce modèle permet de calculer $R_k$. Le petit rayon de raccordement de Koutny est bien connu d'un homme du métier dans le domaine des pneumatiques.

Avantageusement on peut compléter le procédé selon l'invention et estimant le degré d'hydroplanage à partir de la hauteur d'eau ($he$) et de la vitesse du véhicule. Cette estimation est avantageusement réalisée à partir d'un abaque expérimental reliant la grandeur $1 - \frac{S}{S_0}$ à la vitesse pour différentes hauteurs d'eau dans lequel :

- une première surface S détermine une surface instantanée d'aire de contact direct de la bande de roulement du pneumatique mesurée sur un sol mouillé à la vitesse du véhicule ; et
- une seconde surface $S_0$ détermine l'aire de contact direct idéale maximale de la bande de roulement du pneumatique sur le même sol sec et/ou pour une faible vitesse du véhicule garantissant l'absence d'un début d'hydroplanage.

L'invention a aussi pour objet un dispositif d'estimation de la hauteur d'eau ($h_e$) présente sur un sol mouillé d'une chaussée et située au contact d'une bande de roulement d'un pneumatique d'un véhicule évoluant sur ce sol mouillé comportant :

- un pneumatique dont une bande de roulement est équipée d'un ou plusieurs capteurs permettant, chacun, de mesurer un grandeur caractéristique des sollicitations subies localement par la bande de roulement du pneumatique en roulage sur le sol ;
- des moyens de transmission d'un signal correspondant aux mesures de cette grandeur caractéristique ; et
- une unité de traitement de signaux capable d'extraire du signal transmis une portion de signal correspondant au nombre ou à la durée de passage du ou des capteurs dans l'aire de contact du pneumatique en roulage sur le sol.

Ce dispositif est caractérisé en ce qu'il comporte, dans l'unité de traitement, un programme pour, à partir du signal extrait mettre en oeuvre le procédé selon l'invention précédemment décrit.

L'invention sera mieux comprise à la lecture de la description qui suit et à l'examen des figures qui l'accompagnent. Ces figures ne sont présentées qu'à titre indicatif et nullement limitatif de l'invention.

Ces figures montrent :

- Figure 1 : une représentation d'un capteur dans la bande de roulement d'un pneumatique ;
- Figure 2 : une représentation illustrant le dispositif proposé par l'invention ;
- Figures 3 et 4 : des courbes représentant des relevés de mesures de contraintes normales dans l'aire de contact du pneumatique en fonction de différentes vitesses de roulage et pour deux hauteurs d'eau déterminées, respectivement 2 mm et 8 mm ;
- Figures 5 et 6 : des courbes représentant des relevés de mesures de contraintes longitudinales dans l'aire de contact du pneumatique en fonction de différentes vitesses de roulage et pour deux hauteurs d'eau déterminées, respectivement 2 mm et 8 mm ;
- Figure 7 : une représentation schématique du rapport entre la hauteur d'eau et l'allongement de l'aire de contact apparent du pneumatique ;
- Figure 8 : une comparaison entre les valeurs théoriques et expérimentales reliant hauteur d'eau et allongement de l'aire de contact ; et

- Figure 9 : une courbe représentant la grandeur 1-$S/_{S_0}$ en fonction de la vitesse du pneumatique et pour deux hauteurs d'eau de 2 et 8 mm.

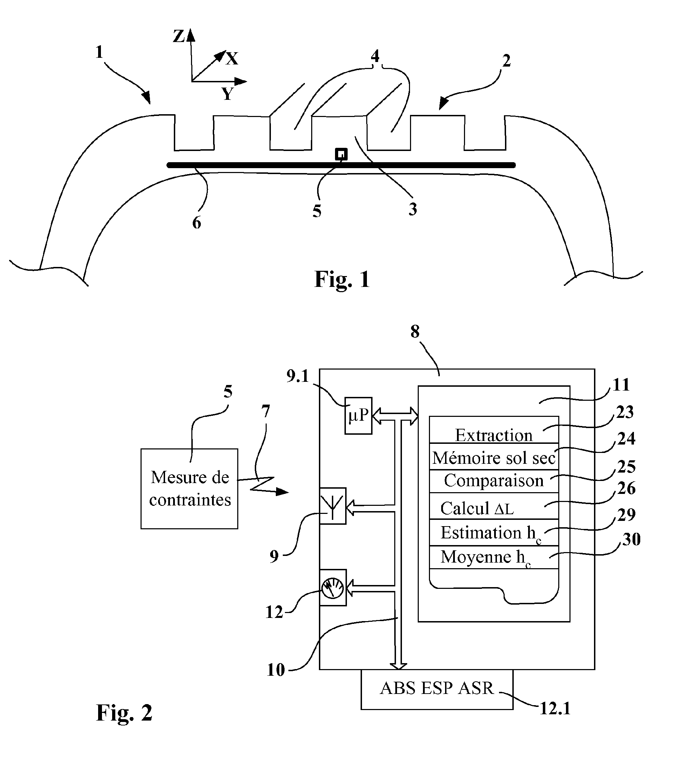

Sur la figure 1 est représentée très schématiquement une coupe axiale partielle d'un pneumatique 1 avec sa bande de roulement 2. Cette bande de roulement peut également correspondre à celle d'un bandage élastique non pneumatique.

La surface extérieure de la bande de roulement d'un pneumatique n'est pas lisse mais comprend usuellement un ensemble de sillons longitudinaux 4 et de rainures transversales ou sensiblement transversales pour faciliter l'évacuation de l'eau sur des chaussées mouillées. Les sillons et rainures définissent des pains de gomme qui viennent en contact avec le sol. L'ensemble correspond à la sculpture du pneumatique. A la figure 1, le pain de gomme 3 est disposé entre deux sillons 4 ainsi que deux rainures transversales non représentées.

Certains de ces pains 3 comportent un capteur 5 de contraintes (ou autre grandeur équivalente), on obtient alors un pain de mesure. Ce capteur 5 est implanté à la base du pain de mesure 3 et au-dessus des nappes de renforcement 6 de la structure du pneumatique. Il est souhaitable de placer le capteur 5 dans un volume de la gomme du pneumatique qui ne subira pas d'usure durant la durée de vie du pneumatique. De la sorte, les mesures sont possibles durant toute la durée de vie du pneumatique. Selon l'invention, les capteurs mesurant les contraintes sont placés, de préférence, sur des pains 3 placés au centre d'une largeur de pneumatique selon l'axe Y de la figure 1 c'est-à-dire entre ses deux épaules. Un placement de ce capteur à l'épaule reste néanmoins aisément possible dans le cadre de l'invention.

L'objectif de ces capteurs est de pouvoir mesurer une contrainte (ou une force) subie par la bande de roulement 2 du pneumatique ou, selon une variante, un déplacement voire une déformation de cette bande de roulement 2.

Les capteurs utilisés fonctionnent selon différentes technologies, il peut s'agir de jauges piézo-électriques ou piézo-résistives ou de condensateurs. On peut ainsi, par exemple, associer un capteur à effet Hall avec son élément magnétique l'ensemble noyé dans la gomme du pneumatique. On pourra pour plus de précision concernant les technologies employées pour ces capteurs se reporter à la lecture du document US-B-6 666 079 qui donne une description concernant différents capteurs de contrainte utilisés dans un pneumatique.

La figure 2 illustre le dispositif de mesure de l'invention comportant les capteurs 5 de mesure de contraintes ainsi que des moyens 7 de transmission du signal à une unité 8 de traitement de signaux. Le module de traitement 8 est, de préférence, placé dans le véhicule. On peut, dans une variante, placer ce module 8 dans le pneumatique lui-même. Selon cette variante, cela nécessite des moyens de transmission du signal traité au conducteur du véhicule.

L'homme du métier connaît par ailleurs les différentes formes possibles de moyens de transmission pour transmettre un signal entre un pneumatique et le véhicule. On peut, à cet effet, se reporter au document EP-A-1 350 640 qui illustre notamment une antenne implantée dans le pneumatique. Cette antenne est positionnée à l'intérieur même de la bande de roulement 2 et est reliée par un câble au capteur 5.

Il peut s'agir d'une antenne de champ électrique de type quart d'onde, ou encore de type modulation de fréquence ou d'amplitude de signal de puissance. Il est utile de préciser ici, qu'une antenne primaire fixée sur le véhicule en regard d'une antenne secondaire placée dans le pneumatique permet également, par effet d'inductance, une transmission de puissance de l'antenne primaire reliée par exemple à la batterie du véhicule à l'antenne secondaire de façon à fournir en énergie le capteur 5 de mesure. Une micro batterie insérée avec le capteur 5 dans un insert pré moulé de la bande de roulement 2 peut aussi assurer cette fonction.

A la figure 2, le signal correspondant aux mesures de contrainte est transmis, par les moyens 7, à l'unité 8 de traitement après réception par une antenne 9.

Par ailleurs, le fonctionnement du capteur 5 peut se faire via un circuit électronique de mesure de type CIAS (circuit électronique intégré à une application spécifique), un système d'alimentation tel que vu précédemment et un système de codage de la mesure, le tout avant la transmission des mesures constituant le signal à analyser. L'antenne 9 est reliée à un micro processeur 9.1 de l'unité de traitement 8 via un bus de jonction interne 10.

L'unité de traitement 8 comporte une mémoire programme 11. Le programme mémorisé permet, selon différentes sections de programmes, de traiter le signal jusqu'à l'obtention d'une information de la hauteur d'eau $h_e$. Une fois l'information obtenue, via le bus de liaison 10, un affichage peut être provoqué sur un afficheur 12 placé à l'intérieur même du véhicule.

Cet afficheur 12 se présente sous la forme, par exemple, d'un cadran affichant une donnée relative et facilement interprétable. En effet, une donnée intrinsèque de la hauteur d'eau ne peut être que faiblement significative pour le conducteur du véhicule. Il s'agit surtout pour le conducteur de prendre en compte la hauteur d'eau afin de réguler en conséquence sa vitesse, en réduisant sa vitesse ou en adaptant son type de conduite selon par exemple une conduite plus souple. L'information peut se présenter, par exemple, sous la forme d'une zone verte pour une hauteur d'eau évaluée faible, d'une zone orange pour une hauteur d'eau importante et dangereuse pour la conduite et enfin d'une zone rouge pour une hauteur d'eau jugée critique.

La communication de la hauteur d'eau $h_e$ ou de l'information hauteur d'eau peut également être transmise, en plus ou seulement, aux différents dispositifs 12.1 de sécurité active présents aujourd'hui sur un véhicule.

Ces dispositifs sont les dispositifs d'anti-blocage de roues (ABS) de correction de trajectoire (ESP) ou d'anti-patinage (ASR). Ces dispositifs 12.1 prennent en compte de façon instantanée et selon différents critères le comportement du pneumatique sur la chaussée. Il est donc intéressant pour ces derniers d'intégrer un critère supplémentaire tenant compte de la hauteur d'eau sur la chaussée.

Ces différents dispositifs de sécurité active 12.1 pourront ainsi améliorer leur sensibilité en tenant compte d'une hauteur d'eau $h_e$ présente devant et/ou sous le pneumatique.

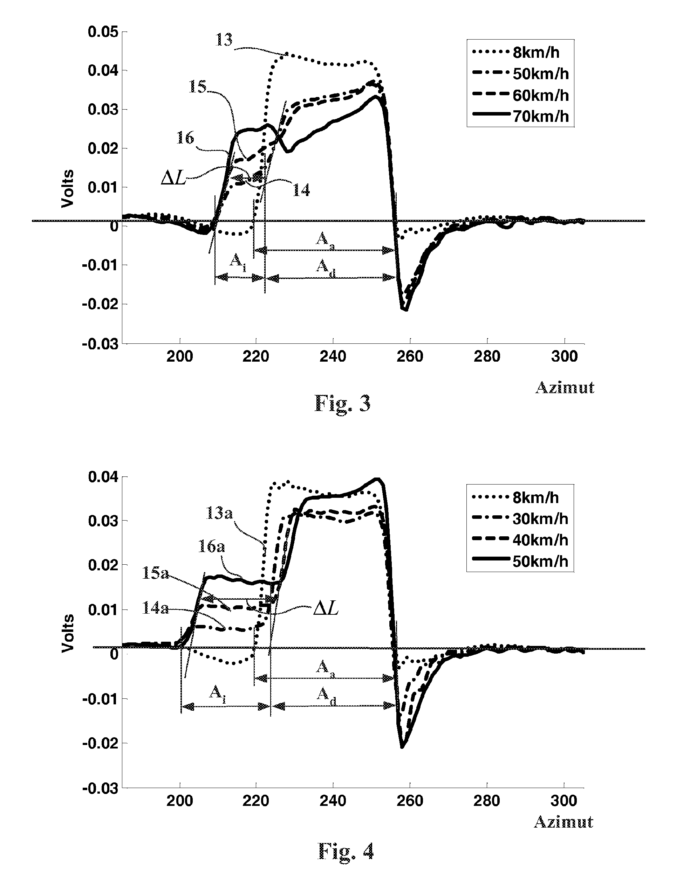

A la figure 3 sont représentées plusieurs courbes correspondant au signal obtenu par les mesures de contraintes normales en fonction du roulage de la bande de roulement 2 du pneumatique 1 sur le sol correspondant à la chaussée. Ces différentes courbes correspondent à différentes vitesses de roulage du pneumatique. En ordonnée, l'échelle est arbitraire et correspond aux valeurs données par le capteur de mesure en volts. En abscisse, les positions des points de mesure dans l'aire de contact sont données à partir du numéro d'ordre des mesures concernées. L'échantillonnage est réalisé avec 512 mesures par tour. Ces numéros d'ordre sont directement reliés à l'azimut du point de mesure.

Ainsi, le déploiement linéaire d'une circonférence totale, à savoir un tour complet du pneumatique étudié sur la chaussée correspond en abscisse, dans l'exemple considéré, à 512 points de mesure.

A la figure 3, on voit que les signaux de mesure ont une amplitude quasiment nulle au début et à la fin des signaux, en faisant abstraction d'un faible offset. Pour simplifier, dans ce cas de mesures de contraintes normales au sol, on appelle « aire de contact apparente » la portion des signaux de mesure dans laquelle l'amplitude de ces signaux est positive. Une valeur positive des signaux de mesure correspond à une compression du pain de gomme 3, et une valeur négative correspond à une extension du pain de gomme.

A la figure 3, le signal a été obtenu expérimentalement pour une hauteur d'eau prédéterminée sur la chaussée de 2 mm. Les contraintes mesurées, sont celles correspondant à des contraintes de compression subies par la bande de roulement 2 du pneumatique 1 et plus précisément par un capteur 5 de la bande de roulement lors de son passage dans l'aire de contact avec le plan de la chaussée et ce, selon une direction normale au plan de la chaussée.

La courbe 13 de la figure 3 représente un signal correspondant à des mesures de contraintes pour une faible vitesse de roulage du pneumatique, à savoir 8 km/h. A cette faible vitesse, la présence d'une hauteur d'eau sur la chaussée n'a pas de conséquence sur le signal de contrainte normale et le signal détecté à cette vitesse correspond à celui qu'on peut retrouver sur une route complètement sèche. Ainsi, lorsque le ou les capteurs de contrainte se trouvent en dehors de l'aire de contact direct de la bande de roulement avec le sol de la chaussée, les contraintes mesurées sont sensiblement nulles. La partie de la courbe correspondant aux mesures de contraintes négatives correspond à une section de la bande de roulement quittant la zone d'écrasement sur le sol et reprenant la courbure naturelle du pneumatique.

Avec la définition précédente, on peut estimer la longueur de l'aire de contact apparente $A_a$, qui dans ce cas est aussi l'aire de contact direct $A_d$, par la portion de la courbe 13 indiquée $A_a$.

Les courbes 14, 15 et 16 ont été obtenues expérimentalement pour la même hauteur d'eau de 2 mm aux vitesses respectivement de 50, 60 et 70 km/h. Ces courbes ont une allure sensiblement différente de celle de la courbe 13. En ayant recalé toutes les courbes au point où, à l'arrière de l'aire de contact, la contrainte repasse par zéro, on constate que l'aire de contact apparente $A_a$ est sensiblement allongée au début de l'aire de contact. On voit apparaître un premier plateau dont la hauteur augmente avec la vitesse, on peut estimer que la longueur de ce premier plateau ou valeur momentanée $\Delta L$ correspond à la longueur de la zone de contact indirect $A_i$ c'est-à-dire la zone dans laquelle un film d'eau se trouve entre la bande de roulement et le sol. On voit aussi que la longueur de la zone de contact direct $A_d$ est sensiblement diminuée relativement à celle de la courbe 13.

Pour pouvoir estimer la longueur de l'aire de contact indirect $A_i$, le procédé selon l'invention propose de déterminer la valeur momentanée $\Delta L$. La figure 3 illustre un procédé de détermination de $\Delta L$ dans lequel on détermine le décalage entre les deux fronts de montés successifs liés au premier puis au second plateau. Ce décalage illustré dans le cas de la courbe 14 a une valeur qui ne varie pratiquement pas avec la vitesse dans une large gamme de vitesse. On voit aussi que la courbe 16, obtenue à une vitesse de 70 km/h présente une allure difficile à interpréter dans laquelle les deux plateaux semblent avoir une hauteur voisine, cela indique que le phénomène d'hydroplanage devient très marqué.

Ainsi l'allongement de l'aire de contact $\Delta L$ ne dépend pratiquement pas de la vitesse de roulage du pneumatique. La présence du premier plateau sur le signal étudié et ce, dès le roulage du pneumatique à une vitesse, par exemple de 40 km/h, a pour source l'apparition de nouvelles contraintes.

Ces nouvelles contraintes ont pour origine une hauteur d'eau présente juste devant le pneu sur toute sa largeur, selon l'axe Y de la bande de roulement 2. Cette hauteur d'eau a pour effet ainsi d'établir un contact intermédiaire entre le sol de la chaussée et la bande de roulement 2 du pneumatique et ce avant le contact direct d'un capteur avec le sol de la chaussée.

La contrainte s'établit donc toujours entre le sol et la bande de roulement 2 du pneumatique mais via l'élément liquide constituant la hauteur d'eau. Le premier plateau obtenu sur le signal est donc celui d'un capteur détectant une contrainte sur le sol via l'élément liquide correspondant à cette hauteur d'eau. Ce signal représente donc la résistance opposée par l'eau au pain du pneu (pression hydrostatique), qui dépend de la vitesse de roulage selon $P \approx \dfrac{1}{2}\rho V^{2}$ (p : masse volumique, V : vitesse de roulage). La hauteur d'eau présente à faible vitesse n'a pas pour effet de présenter un même premier plateau sur le signal mesuré car l'entrée du capteur dans le volume d'eau correspondant exige une vitesse suffisante afin de créer une tension ou une résistance suffisante de la part de l'élément liquide et par conséquent une contrainte significative.

A la figure 4, on retrouve en ordonnée et en abscisse les mêmes paramètres décrits pour la figure 3, on retrouve également les courbes respectivement 13a, 14a, 15a et 16a correspondant aux vitesses de 8, 30, 40 et 50 km/h de roulage du pneumatique mais pour une hauteur d'eau sur la chaussée de 8 mm.

A faible vitesse (8 km/h) la courbe 13a est très sensiblement identique à la courbe 13 obtenue pour une hauteur d'eau de 2 mm. Pour des vitesses significatives du véhicule, en l'occurrence 30, 40 et 50 km/h, on constate à nouveau l'apparition de l'allongement de l'aire de contact ΔL sur la chaussée. Ces résultats sont obtenus pour un pneu utilisé, strictement identique à celui ayant servi pour les résultats de la figure 3, en l'occurrence un pneumatique Michelin Energy 195/65R15 XH1.

Dans ce dernier cas, l'allongement ΔL de l'aire de contact est supérieur à celui obtenu pour une hauteur d'eau inférieure à 2 mm. Dans ce cas également, on constate qu'à nouveau cet allongement ΔL, obtenu pour une hauteur d'eau de 8 mm, ne dépend pas, une fois détecté grâce à une vitesse suffisante, de la vitesse de roulage du pneumatique.

Sa longueur est en revanche plus importante car la hauteur d'eau présente de façon frontale devant la largeur de la bande de roulement du pneumatique est plus importante.

Ainsi, le contact établi par la présence de ce milieu liquide entre la bande de roulement du pneumatique et le sol de la chaussée s'établit plus haut sur le pneu donc plus tôt. Le capteur entre plus tôt dans la partie correspondant à l'aire de contact indirect (car se faisant par l'intermédiaire d'un film d'eau) apparent entre le sol et la bande roulement 2 du pneumatique 1. La partie du signal correspondant à l'allongement ΔL de l'aire de contact est donc plus importante.

Puis, à partir d'un indice de mesure proche de 225, le contact est à nouveau direct entre le sol et la bande de roulement, on retrouve un signal de contraintes pour les courbes 14a, 15a et 16a, sensiblement identique à celui obtenue pour les courbes 14, 15 et 16, de la figure 3.

Le passage d'un capteur de la bande de roulement dans l'aire de contact sur le sol de la chaussée présente donc deux parties : une première partie correspondant à un contact du capteur avec le sol de la chaussée, mais par l'intermédiaire d'un élément liquide correspondant à la hauteur d'eau que l'on souhaite estimer ($A_i$) et une seconde partie correspondant à un contact direct du capteur avec le sol de la chaussée ($A_d$).

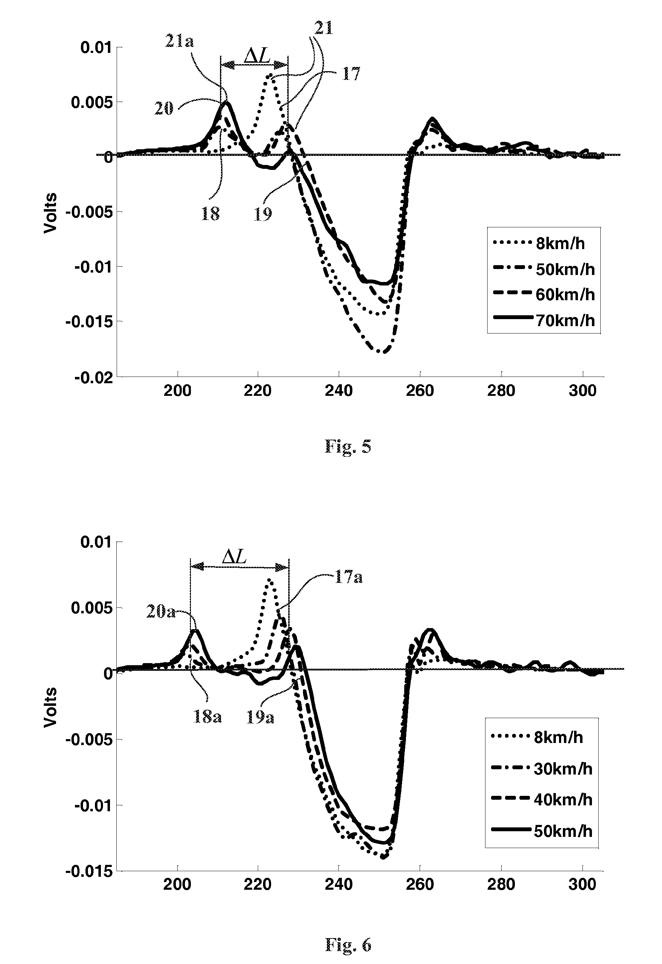

Sur la figure 5, les courbes 17, 18, 19 et 20 sont obtenues pour des vitesses respectivement de 8, 50, 60 et 70 km/h du pneumatique sur le sol. Ces courbes représentent, en ordonnées, des contraintes de cisaillement selon l'axe X de la bande de roulement c'est-à-dire selon le sens circonférentiel de roulage du pneumatique sur le sol, en abscisse, des points de mesure tout le long de la bande de roulement. Seule une partie de la bande de roulement est ici représentée et correspond aux mesures significatives.

Toujours à faible vitesse, en l'occurrence 8 km/h, le signal de contraintes obtenu respectivement sur la courbe 17 est similaire ou sensiblement similaire à celui obtenu pour une route sèche ou humide, mais ne présentant pas de hauteur d'eau. Au moment du contact du pain de mesure 3, dans lequel se trouve le capteur de contrainte, avec le sol, les contraintes de cisaillement relevées deviennent positives ou motrices (orientées dans le sens du roulage), passent par un maximum 21, puis, durant la suite de la présence du capteur dans l'aire de contact sur le sol, les contraintes de cisaillement évoluent vers des valeurs négatives ou freineuses, opposées au sens du roulage du pneumatique. Enfin, en sortie de l'aire de contact, les contraintes subies par la bande de roulement 2 sont à nouveau sensiblement nulles. Ce « signal en S » correspond à la mécanique classique de contact au sol de la bande de roulement d'un bandage pneumatique, bien connue de l'homme de l'art.

Pour des vitesses significatives de 50, 60 et 70km/h correspondant aux courbes respectives 18, 19 et 20 apparaît encore le pic 21 correspondant au même phénomène physique ainsi qu'un pic 21a, dit pic anticipé, détecté avant le pic 21. Ce premier pic anticipé 21a, de contrainte positive, est d'autant plus important que la vitesse est importante. Pour des raisons similaires à celles évoquées précédemment pour les figures 3 et 4, l'apparition de ce premier pic 21a provient du fait de la rentrée, à une vitesse suffisamment rapide, d'un capteur de contraintes longitudinales dans la hauteur d'eau présente entre la bande de roulement 2 du pneumatique et le sol.

Or, lorsque l'on mesure la distance ΔL entre les deux pics 21a et 21 d'une même courbe, cette distance ΔL est sensiblement identique pour toutes les courbes étudiées, respectivement 18, 19 et 20. Cette valeur ΔL est alors, comme pour l'étude des contraintes de pression, indépendante de la vitesse de roulage du pneumatique.

Ainsi la valeur momentanée choisie et représentative de l'allongement de l'aire de contact pour les deux types de contraintes (compression et cisaillement) est la même : ΔL.

Sur les courbes de la figure 6, 17a, 18a, 19a et 20a respectivement étudiées pour des vitesses de 8, 30, 40 et 50 km/h et pour une hauteur d'eau plus importante de 8 mm, cette valeur momentanée de la distance ΔL entre les deux premiers pics distingués à partir d'une vitesse de 30 km/h est plus importante. Cette valeur momentanée reste néanmoins constante pour toutes les vitesses étudiées à cette même hauteur d'eau.

La raison de l'allongement de la distance ΔL entre les deux pics de contrainte longitudinale est la même que celle évoquée précédemment pour les figures 3 et 4. Une entrée plus haute et donc plus précoce du capteur dans une aire de contact s'établit entre le pneumatique et le sol, via le milieu liquide.

La première partie de l'aire de contact établie entre le capteur de contrainte longitudinale et le sol, par l'intermédiaire du milieu liquide correspondant à la hauteur d'eau, est d'autant plus mesurable que la vitesse du pneumatique est suffisamment importante. Il est en effet nécessaire qu'une tension ou une pression suffisante soit présente grâce à la vitesse entre le pneumatique et la chaussée sur le volume d'eau concerné.

Ainsi, pour les quatre courbes étudiées des figures 3 à 6, l'aire totale de contact correspondant aux contacts à la fois directs et indirects entre le sol et la bande de roulement 2, apparaît pour des valeurs de contrainte de pression ou de cisaillement significatives. En effet, les valeurs affichées en dehors de cette aire totale de contact, via le milieu liquide ou directement sur le sol de la chaussée, sont sensiblement nulles.

En revenant à la figure 2 du dispositif de l'invention, un sous programme 23 du programme 11 de l'unité de traitement 8 permet d'extraire une partie du signal reçu par les capteurs correspondant à un signal de contrainte sensiblement non nul, par exemple typiquement supérieur en valeur absolue à un seuil.

Ainsi, l'extraction de la partie du signal, pour des contraintes de pression, correspondant au passage d'un ou plusieurs capteurs dans l'aire de contact de la bande de roulement 2 consiste à extraire le signal lorsque le (ou les) capteur émet un signal significatif de mesure de contrainte la durée de cette portion du signal correspond à la durée du passage du capteur dans l'aire de contact.

La mémoire 11 comporte alors une zone de données 24. Cette zone de données 24 comporte les données d'un signal obtenu pour des contraintes de compression selon l'axe Z de la figure 1 sur un sol sec ou lors de faibles vitesses. Ces contraintes correspondent à des contraintes de compression subies par la bande de roulement 2 du pneumatique 1 lors du passage dans l'aire de contact avec le plan de la chaussée.

A l'aide d'un sous programme 25, une comparaison est alors effectuée entre les données du signal extraites par le programme 23 et les données enregistrées dans la zone de données 24 de façon à, établir la différence de durée de temps de passage d'un capteur dans l'aire de contact.

La section de calcul du programme 26, par une simple règle de trois, le nombre de mesures par tour et la vitesse de roulage étant connus, calcule la valeur momentanée 22 de l'allongement de l'aire de contact ΔL.

Pour l'étude du signal correspondant aux contraintes de cisaillement, l'extraction de la partie du signal se fait pour des grandeurs positives supérieures à un seuil significatif, par exemple un millième de volt, dans ce cas, le sous programme 26 prend en compte la durée de présence d'un capteur entre deux valeurs crêtes positives de signal reçu pendant un tour de roue. Ainsi, de la même façon que précédemment le sous programme 26 calcule directement, en connaissant le nombre de mesures capteur sur un tour de roue et/ou la vitesse de roulage, la valeur momentanée 22 ΔL correspondant à la valeur de la distance entre deux pics.

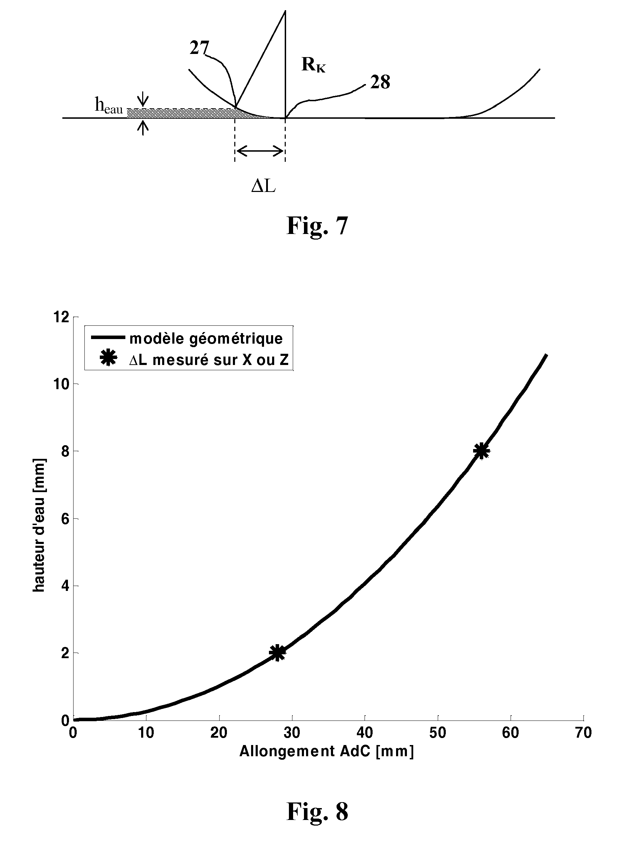

A la figure 7 est représenté un pneumatique avec son écrasement localisé sur la chaussée ainsi qu'une présence d'eau en avant du pneumatique.

Cette présence d'eau est définie selon une hauteur d'eau $h_e$ et détermine le long de la circonférence du pneumatique deux points. Un premier point 27 où l'eau entre en contact avec le pneumatique mais où le bord du pneumatique comportant les capteurs de contraintes ne se trouve pas encore en contact avec le sol de la chaussée, un second point 28, où l'eau tangente à la fois le sol et le pneumatique mais où la bande de roulement 2 de ce dernier prend contact avec le sol.

Entre ces deux points, la courbure du pneumatique épouse un rayon bien connu de l'homme du métier appelé rayon de Koutny $R_k$, sensiblement différent du rayon du pneumatique mais prenant en compte le phénomène d'écrasement du pneumatique au contact de la chaussée impliquant un rayon de courbure différent en entrée et en sortie de l'aire de contact relativement au rayon de courbure de la partie haute du pneumatique.

Selon une projection orthogonale du point 27 sur le sol représentant la chaussée, on détermine alors entre cette projection et le point 28 une distance au sol correspondant à l'allongement ΔL de l'aire de contact.

Cet allongement ΔL de l'aire de contact de la bande de roulement avec le sol correspond sensiblement à celui mesuré par les capteurs 5, via le milieu liquide et pour des vitesses suffisamment rapides.

Ce modèle géométrique permet d'établir une relation trigonométrique entre ΔL et $h_e$ selon la formule :

$$\Delta L = R_k \sin\left\{ \arccos\left( 1 - {h_e}\Big/{R_k} \right) \right\}$$

ou encore :

$$h_e = K\left\{ 1 - \cos(\arcsin\frac{\Delta L}{K}) \right\}$$

Un programme de calcul 29 de la mémoire 11 de l'unité 8 de traitement, détermine alors, à partir de cette formule et à partir de la connaissance de la valeur momentanée 22 $\Delta L$, une estimation de la hauteur d'eau $h_e$.

La figure 8 représente l'adéquation entre la hauteur d'eau obtenue par la formule théorique ci-dessus à partir de la connaissance de la valeur momentanée 22 $\Delta L$ (connaissance issue des contraintes mesurées à partir de la méthode décrite) et les cas réellement mesurés, où la hauteur d'eau vaut réellement 2 ou 8 mm. On constate qu'il est tout à fait raisonnable de modéliser l'estimation de $h_e$ à partir de $\Delta L$ par la formule trigonométrique évoquée, puisque $\Delta L$ et $h_e$ la respectent bien dans les cas des mesures réelles analytiques décrites.

Un programme de calcul 30 permet également de déterminer une valeur moyenne du calcul obtenu de la hauteur d'eau grâce aux contraintes de compression et d'autre part, grâce aux contraintes de cisaillement, par exemple selon la moyenne stricte des deux informations ou selon une moyenne pondérée. Ce dernier programme 30 permet alors d'améliorer la robustesse du calcul d'estimation de la hauteur d'eau.

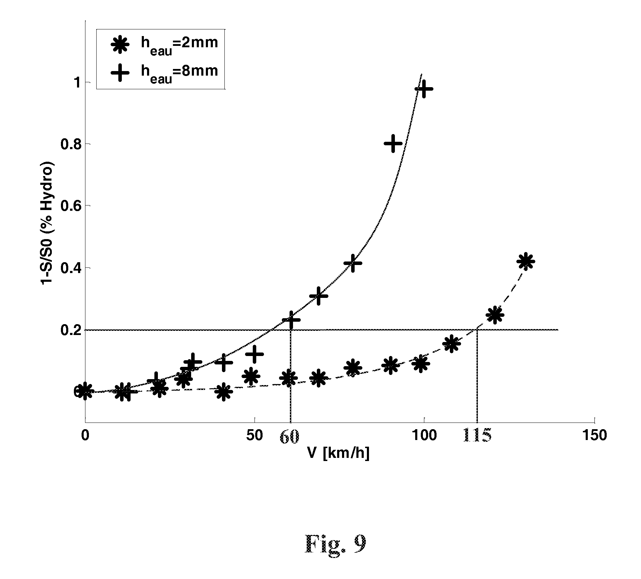

A la figure 9 est représenté l'évolution de la grandeur $1 - S/S_0$ caractérisant la phénoménologie de l'hydroplanage en fonction de la vitesse V de roulage d'un pneumatique et pour deux hauteurs d'eau, respectivement de 2 et 8 mm.

La surface S du rapport détermine une surface instantanée d'aire de contact direct de la bande de roulement du pneumatique, mesurée sur le sol mouillé. L'aire de contact direct correspond à une aire dont le contact entre le matériau composant le sol de la route et le matériau composant la bande de roulement du pneumatique est sans intermédiaire c'est à dire sans qu'il puisse y avoir un film d'eau entre le sol et la partie de la bande de roulement du pneumatique en roulage sur ce sol.

Ainsi, sur une chaussée présentant une hauteur d'eau, cette aire de contact direct se réduit d'autant du fait d'un début de formation d'un film d'eau caractérisant le début du phénomène d'hydroplanage.

La seconde surface $S_0$ détermine l'aire de contact direct de la bande de roulement du pneumatique sur un sol sec de la même chaussée ou détermine l'aire du contact de la bande de roulement du pneumatique sur un sol mouillé mais pour une faible vitesse du véhicule.

En effet, dans ce dernier cas, la faible vitesse du véhicule garantit non seulement une faible résistance de la hauteur d'eau présente devant le ou les pneumatiques du véhicule mais permet surtout aux motifs sur la bande de roulement du pneumatique agissant sur une durée plus longue d'évacuer l'eau entre le pneumatique et le sol et d'éviter ainsi la formation ou le début de formation d'un film d'eau.

La surface $S_0$ est donc la surface maximale de contact direct que le pneu va pouvoir développer sur le sol, quelles que soient la vitesse et la hauteur d'eau.

La grandeur $1 - S/S_0$ est donc nulle en l'absence de phénomène d'hydroplanage même avec une hauteur d'eau sur la chaussée mais alors pour de faibles vitesses comprises entre 0 et 20 Km/h environ et est égale à 1 lorsque le phénomène d'hydroplanage est total sous le pneumatique.

Cette figure illustre la très forte influence de la vitesse et de la hauteur d'eau sur le phénomène d'hydroplanage. Pour une hauteur d'eau sur la chaussée de 2 mm (courbe en traits pointillés), le seuil de 20 % d'hydroplanage est atteint à une vitesse de 115 km/h alors que ce seuil est atteint dès 60 km/h pour une hauteur d'eau de 8 mm (courbe en traits pleins).

La phénoménologie de l'hydroplanage est ainsi correctement représentée et caractérisée par la grandeur $1 - S/S_0$.

L'invention n'est pas limitée aux exemples décrits et représentés et diverses modifications peuvent y être apportées sans sortir de son cadre défini par les revendications annexées.

**Revendications**

1. Procédé d'estimation de la hauteur d'eau ($h_e$) présente sur un sol mouillé d'une chaussée et située au contact d'une bande de roulement (2) d'un pneumatique d'un véhicule évoluant sur ce sol mouillé, la bande de roulement du pneumatique étant équipée d'un ou plusieurs capteurs (5) permettant chacun de mesurer une grandeur caractéristique des sollicitations que subit localement la bande de roulement lorsque le pneumatique roule sur le sol, **caractérisé en ce qu'**il comporte les étapes suivantes :

    - mesurer ladite grandeur caractéristique lorsque le pneumatique roule sur le sol ;
    - produire un signal correspondant à ces mesures ;
    - extraire de ce signal une portion relative au passage du ou des capteurs dans l'aire de contact apparente du pneumatique sur le sol ;
    - déduire de cette information une valeur momentanée ($\Delta L$) reliée à la longueur de la zone de contact indirect de l'aire de contact apparente de la bande de roulement du pneumatique sur le sol ; et
    - estimer la hauteur d'eau ($h_e$) à partir d'un calcul prenant en compte la valeur momentanée déduite.

2. Procédé selon la revendication 1, dans lequel la grandeur mesurée par le capteur (5) est caractéristique de la compression subie par la bande de roulement du pneumatique dans une direction normale au plan de la chaussée.

3. Procédé selon la revendication 2, dans lequel l'étape de déduction d'une valeur momentanée correspond à :

- lorsque la portion comprend deux plateaux successifs, la valeur momentanée est la mesure de la longueur ($\Delta L$) du premier plateau, du côté de l'entrée de l'aire de contact apparente ;
- lorsque la portion comprend un seul plateau, la valeur momentanée est zéro.

4. Procédé selon la revendication 1, dans lequel la grandeur mesurée par le capteur (5) est caractéristique du cisaillement longitudinal subi par la bande de roulement du pneumatique.

5. Procédé selon la revendication 4, dans lequel l'étape de déduction d'une valeur momentanée correspond à :

- lorsque la portion comprend, du côté de l'entrée de l'aire de contact, deux pics positifs successifs, la valeur momentanée est la mesure de la longueur ($\Delta L$) séparant les maxima des deux pics ;
- lorsque la portion comprend un seul pic positif, la valeur momentanée ($\Delta L$) est zéro.

6. Procédé selon l'une quelconque des revendications 1 à 5, dans lequel le capteur (5) mesure à la fois une grandeur caractéristique de la compression normale et une grandeur caractéristique du cisaillement longitudinal subi par la bande de roulement du pneumatique et dans lequel l'estimation de la valeur momentanée ($\Delta L$) est une moyenne pondérée des estimations déduites des signaux de compression normale et de cisaillement longitudinal.

7. Procédé selon l'une quelconque des revendications 1 à 6, dans lequel la hauteur d'eau ($h_e$) est déduite de la valeur momentanée ($\Delta L$) en utilisant un abaque.

8. Procédé selon l'une quelconque des revendications 1 à 6, dans lequel la hauteur d'eau ($h_e$) est déduite en utilisant l'équation suivante :

$$h_e = K\left\{1 - \cos(\arcsin\frac{\Delta L}{K})\right\}$$

avec $h_e$ hauteur d'eau estimée, $\Delta L$ la valeur momentanée et $K$ une valeur constante liée au pneumatique.

9. Procédé selon la revendication 8, dans lequel le facteur $K$ est le petit rayon de raccordement de Koutny ($R_K$).

10. Procédé selon l'une quelconque des revendications précédentes, comportant l'étape complémentaire d'estimer le degré d'hydroplanage à partir de la hauteur d'eau ($he$) et de la vitesse du véhicule.

11. Procédé selon l'une quelconque des revendications précédentes, dans lequel la grandeur caractéristique mesurée est une contrainte.

12. Dispositif d'estimation de la hauteur d'eau ($h_e$) présente sur un sol mouillé d'une chaussée et située au contact d'une bande de roulement (2) d'un pneumatique d'un véhicule évoluant sur ce sol mouillé comportant :

- un pneumatique dont une bande de roulement est équipée d'un ou plusieurs capteurs (5) permettant, chacun, de mesurer un grandeur caractéristique des sollicitations subies localement par la bande de roulement du pneumatique en roulage sur le sol ;
- des moyens de transmission d'un signal correspondant aux mesures de cette grandeur caractéristique ; et
- une unité de traitement de signaux capable d'extraire du signal transmis, une portion de signal correspondant au nombre ou à la durée de passage du ou des capteurs dans l'aire de contact du pneumatique en roulage sur le sol ;

**caractérisé en ce qu'**il comporte, dans l'unité de traitement, un programme pour, à partir du signal extrait mettre en oeuvre le procédé selon l'une des revendications 1 à 11.

**Patentansprüche**

1. Abschätzverfahren der Wasserhöhe ($h_e$), die auf einem nassen Boden einer Fahrbahn vorhanden ist und mit einer Lauffläche (2) eines Reifens eines Fahrzeugs in Berührung ist, das auf diesem nassen Boden fährt, wobei die Lauffläche des Reifens mit einem oder mehreren Sensoren (5) ausgestattet ist, die jeweils erlauben, eine charakteristische Größe der Beanspruchungen zu messen, die die Lauffläche lokal erfährt, wenn der Reifen auf dem Boden fährt, **dadurch gekennzeichnet, dass** es die folgenden Schritte aufweist:

- Messen der charakteristischen Größe, wenn der Reifen auf dem Boden fährt,
- Erzeugen eines Signals, das diesen Messungen entspricht,
- Extrahieren eines Teils in Zusammenhang mit der Passage des oder der Sensoren in dem sichtbaren Berührungsbereich des Reifens auf dem Boden,
- aus dieser Information Ableiten eines Momentanwerts ($\Delta L$), der mit der Länge des indirekten Berührungsbereichs des sichtbaren Berührungsbereichs der Lauffläche des Reifens auf dem Boden zusammenhängt, und

- Schätzen der Wasserhöhe ($h_e$) ausgehend von einer Berechnung, die den abgeleiteten Momentanwert berücksichtigt.

**2.** Verfahren nach Anspruch 1, bei dem die von dem Sensor (5) gemessene Größe für die Kompression charakteristisch ist, die die Lauffläche des Reifens in eine senkrechte Richtung zu der Fahrbahnebene erfährt.

**3.** Verfahren nach Anspruch 2, bei dem der Ableitungsschritt eines Momentanwerts Folgendem entspricht:

- wenn der Teil zwei aufeinanderfolgende Plateaus aufweist, ist der Momentanwert die Messung der Länge ($\Delta L$) des ersten Plateaus auf der Seite des Eingangs des sichtbaren Berührungsbereichs,
- wenn der Teil ein einziges Plateau aufweist, ist der Momentanwert null.

**4.** Verfahren nach Anspruch 1, bei dem die von dem Sensor (5) gemessene Größe für das Längsscheren, das die Lauffläche des Reifens erfährt, charakteristisch ist.

**5.** Verfahren nach Anspruch 4, bei dem der Schritt des Ableitens eines Momentanwerts Folgendem entspricht:

- wenn der Teil auf der Seite des Eingangs des Berührungsbereichs zwei positive aufeinanderfolgende Spitzen aufweist, ist der Momentanwert die Messung der Länge ($\Delta L$), die die Maxima der zwei Spitzen trennt,
- wenn der Teil eine einzige positive Spitze aufweist, ist der Momentanwert ($\Delta L$) null.

**6.** Verfahren nach einem der Ansprüche 1 bis 5, bei dem der Sensor (5) sowohl eine charakteristische Größe der senkrechten Kompression und eine charakteristische Größe des Längsscherens, das die Lauffläche des Reifens erfährt, misst, und bei dem die Schätzung des Momentanwerts ($\Delta L$) ein gewichteter Durchschnitt der Schätzungen ist, die aus den Signalen senkrechter Kompression und des Längsscherens abgeleitet sind.

**7.** Verfahren nach einem der Ansprüche 1 bis 6, bei dem die Wasserhöhe ($h_e$) von dem Momentanwert ($\Delta L$) unter Einsatz einer Schaulinientafel abgeleitet wird.

**8.** Verfahren nach einem der Ansprüche 1 bis 6, bei dem die Wasserhöhe ($h_e$) unter Einsatz der folgenden Gleichung abgeleitet wird:

$$h_e = K\left\{1 - \cos(\arcsin\frac{\Delta L}{K})\right\}$$

wobei $h_e$ die geschätzte Wasserhöhe ist, $\Delta L$ der Momentanwert ist und $K$ ein konstanter Wert ist, der mit dem Reifen zusammenhängt.

**9.** Verfahren nach Anspruch 8, bei dem der Faktor $K$ der kleine Koutny-Anschlussradius ($R_K$) ist.

**10.** Verfahren nach einem der vorhergehenden Ansprüche, das den ergänzenden Schritt des Schätzens des Aquaplaninggrads ausgehend von der Wasserhöhe ($h_e$) und der Geschwindigkeit des Fahrzeugs aufweist.

**11.** Verfahren nach einem der vorhergehenden Ansprüche, bei dem die charakteristische gemessene Größe eine Spannung ist.

**12.** Vorrichtung zum Schätzen der Wasserhöhe ($h_e$), die auf einem nassen Boden einer Fahrbahn vorhanden ist und in Berührung mit einer Lauffläche (2) eines Reifens eines Fahrzeugs, das auf diesem nassen Boden fährt, ist, die Folgendes aufweist:

- einen Reifen, dessen Lauffläche mit einem oder mehreren Sensoren (5) ausgerüstet ist, die jeweils das Messen einer charakteristischen Größe der Beanspruchungen erlauben, die die Lauffläche des Reifens beim Fahren auf dem Boden lokal erfährt,
- Mittel zum Übertragen eines Signals, das den Messungen dieser charakteristischen Größe entspricht, und
- eine Signalverarbeitungseinheit, die fähig ist, aus dem übertragenen Signal einen Signalteil zu extrahieren, der der Anzahl des oder der Sensoren in dem Berührungsbereich des Reifens oder der Dauer ihres Laufens beim Fahren auf dem Boden entspricht,

**dadurch gekennzeichnet, dass** sie in der Verarbeitungseinheit ein Programm aufweist, um ausgehend von dem extrahierten Signal das Verfahren nach einem der Ansprüche 1 bis 11 umzusetzen.

**Claims**

**1.** Method of estimating the height of water ($h_w$) present on wet ground of a road and being in contact with the tread (2) of a tyre of a vehicle travelling on this wet road, the tread of the tyre being equipped with one or more sensors (5) each capable of measuring a characteristic quantity of the stresses that the tread undergoes locally when the tyre is rolling on the ground, **characterized in that** it comprises the following steps:

- said characteristic quantity is measured when the tyre is rolling on the ground;
- a signal corresponding to these measurements is produced;
- a portion of this signal relating to the passing of the sensor or sensors into the apparent area of contact between the tyre and the ground is extracted;
- an instantaneous value ($\Delta L$), connected with the length of the indirect contact region of the apparent area of contact between the tyre tread and the ground, is deduced from this information; and
- the water height (*hw*) is estimated from a calculation taking into account the instantaneous value deduced.

2. Method according to Claim 1, in which the quantity measured by the sensor (5) is characteristic of the compression undergone by the tyre tread in a direction normal to the plane of the road.

3. Method according to Claim 2, in which the step of deducing an instantaneous value is such that:

- when the portion comprises two successive plateaus, the instantaneous value is the measurement of the length ($\Delta L$) of the first plateau, on the entry side of the apparent area of contact; and
- when the portion comprises a single plateau, the instantaneous value is zero.

4. Method according to Claim 1, in which the quantity measured by the sensor (5) is characteristic of the longitudinal shear undergone by the tyre tread.

5. Method according to Claim 4, in which the step of deducing an instantaneous value is such that:

- when the portion comprises, on the entry side of the contact area, two successive positive peaks, the instantaneous value is the measurement of the length ($\Delta L$) separating the maxima of the two peaks; and
- when the portion comprises a single positive peak, the instantaneous value ($\Delta L$) is zero.

6. Method according to any one of Claims 1 to 5, in which the sensor (5) measures both a characteristic quantity of the normal compression and a characteristic quantity of the longitudinal shear undergone by the tyre tread and in which the estimate of the instantaneous value ($\Delta L$) is a weighted average of the estimates deduced from the normal compression and longitudinal shear signals.

7. Method according to any one of Claims 1 to 6, in which the water height ($h_w$) is deduced from the instantaneous value ($\Delta L$) using a chart.

8. Method according to any one of Claims 1 to 6, in which the water height ($h_w$) is deduced using the following equation:

$$ h_w = K \left\{ 1 - \cos\left( \arcsin \frac{\Delta L}{K} \right) \right\} $$

where $h_w$ is the estimated water height, $\Delta L$ is the instantaneous value and $K$ is a constant associated with the tyre.

9. Method according to Claim 8, in which the factor K is the Koutny transition zone radius ($R_K$).

10. Method according to any one of the preceding claims, which includes the complementary step of estimating the degree of hydroplaning from the water height ($h_w$) and the speed of the vehicle.

11. Method according to any one of the preceding claims, in which the measured characteristic quantity is a stress.

12. Device for estimating the height of water ($h_w$) present on wet ground of a road and being in contact with the tread (2) of a tyre of a vehicle travelling on this wet ground, comprising:

- a tyre, the tread of which is equipped with one or more sensors (5) each capable of measuring a characteristic quantity of the stresses undergone locally by the tyre tread rolling on the ground;
- means for transmitting a signal corresponding to the measurements of this characteristic quantity; and
- a signal processing unit capable of extracting, from the transmitted signal, a signal portion corresponding to the number or to the duration of passage of the sensor or sensors in the area of contact of the tyre rolling on the ground,

**characterized in that** it includes a program for implementing the method according to one of Claims 1 to 11 in the processing unit on the basis of the extracted signal.

**Fig. 1**

**Fig. 2**

Fig. 3

Fig. 4

Fig. 5

Fig. 6

**Fig. 7**

**Fig. 8**

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5502433 A
- US 6666079 B

- EP 1350640 A